# EUROPÄISCHE PATENTANMELDUNG

(11) **EP 0 627 715 A2**
(43) Veröffentlichungstag der Anmeldung: **07.12.1994**
(21) Anmeldenummer: 94105222.7
(22) Anmeldetag: 02.04.1994
(51) Int. Cl.: G07G 1/00, G07F 7/06

(54) **Pfandschloss für einen Einkaufswagen**

(30) Priorität: 04.06.1993 DE 4318627; 08.12.1993 DE 4341791
(71) Anmelder: VENDORET HOLDING S.A., L-5801 Hesperange (LU)
(72) Erfinder: Merchel, Horst, D-74321 Bietigheim-Bissingen (DE)
(74) Vertreter: COHAUSZ HASE DAWIDOWICZ & PARTNER

(57) **Zusammenfassung**

Die Erfindung betrifft ein Pfandschloß, insbesondere für einen Einkaufswagen mit einem im oder am Pfandschloß 1 zeitweilig anbringbaren Informationsträger 2, insbesondere einer Karte, durch den/die das Schloß entsperrbar ist und der in Verbindung bringbar ist mit einem Computer des Geschäfts, wobei vom Informationsträger 2 Informationen lesbar sind, die zum Computer des Geschäfts übertragbar sind und/oder auf dem Informationsträger 2 Informationen speicherbar sind, die vom Computer des Geschäfts übertragbar sind.

## Beschreibung

Die Erfindung betrifft ein Pfandschloß, insbesondere für einen Einkaufswagen mit einem im oder am Pfandschloß zeitweilig anbringbaren Informationsträger, insbesondere einer Karte, durch den/die das Schloß entsperrbar ist und der in Verbindung bringbar ist mit einem Computer des Geschäfts.

Es ist bekannt, an Einkaufswagen Pfandschlösser zu befestigen, durch die die Einkaufswagen aneinandergeschlossen werden. Durch Eingabe einer Münze in das Schloß wird ein Einkaufswagen von einem benachbarten Einkaufswagen gelöst, so daß er vom Kunden benutzt werden kann. Hierbei ist auch bereits bekannt, statt einer Münze eine Karte zu verwenden, siehe europäische Patentanmeldung 0 545 233.

Aufgabe der Erfindung ist es, ein Pfandschloß und einen in oder am Pfandschloß anbringbaren Informationsträger, insbesondere eine Pfandkarte derart zu verbessern, daß auf dem Informationsträger Informationen anbringbar sind, die für das Geschäft und/oder für den Kunden von hohem Nutzen sind, wobei das Pfandschloß und/oder der Informationsträger von einfacher Konstruktion und hoher Gebrauchstüchtigkeit und Zuverlässigkeit sind. Ferner ist es Aufgabe der Erfindung, ein Pfandschloß mit Informationsträger so zu verbessern, daß Rabatte und Informationen zu Gewinnspielen (Verlosungen) auf einfache Weise speicherbar und lesbar sind. Hierbei soll die Handhabung des Informationsträgers, des Pfandschlosses, des Einkaufswagens und der dazugehörigen Geräte einfach, schnell und fehlerfrei sein.

Diese Aufgaben werden erfindungsgemäß dadurch gelöst, daß vom Informationsträger Informationen lesbar sind, die zum Computer des Geschäfts übertragbar sind und/oder auf dem Informationsträger Informationen speicherbar sind, die vom Computer des Geschäfts übertragbar sind.

Vorteilhafte Ausgestaltungen der Erfindung sind in den Unteransprüchen aufgeführt. Besonders vorteilhaft ist es hierbei, daß eine Stromquelle in Form von Batterien oder Akkus im Pfandschloß nicht erforderlich sind, da die benötigte Energie durch Strahlung übertragen werden kann.

Das Pfandschloß oder die Karte können vom Einkaufswagen abgenommen werden, um Informationen aufzunehmen oder abzugeben. Der Informationsträger, insbesondere eine Karte, können aber auch im Pfandschloß so lange verbleiben, bis der Einkaufswagen wieder an einen anderen Einkaufswagen oder an eine Sammelstation angeschlossen wird, da in mehreren Ausführungsformen ein Bereich des Informationsträgers zugängig ist, auch wenn dieser sich im Pfandschloß befindet. Darüber hinaus wird in weiteren Ausführungsbeispielen vorgeschlagen, daß der Informationsträger innerhalb des Pfandschlosses Kontakte berührt und hierüber eine Verbindung zum Computer des Geschäfts geschaffen wird.

Besonders vorteilhaft ist es auch, wenn das stationäre Datenanschlußgerät oder die Einrichtung ein vom Kunden bedienbarer Automat ist, der mit dem Computer und/oder der Kasse des Geschäfts verbunden ist. Auch ist von größtem Vorteil, wenn der Informationsträger Informationen aufgegeben erhält, die zu Zwecken der Werbung, Statistik und/oder der Gewährung von Käufervorteilen, insbesondere Rabatten und Verlosungsgewinnen dienen.

Ausführungsbeispiele der Erfindung sind in den Zeichnungen in senkrechten Schnitten dargestellt und werden im folgenden näher beschrieben. Hierbei sind die meisten Innenteile der Pfandschlösser weggelassen.

Es zeigen:
- Fig. 1: Ein Pfandschloß mit einem seitlichen Fenster, durch das die senkrechte Pfandkarte von einer stationären Einrichtung optisch oder durch andere Strahlenarten erreichbar ist,
- Fig. 2: ein Pfandschloß mit oberem Fenster, hinter dem die Pfandkarte über einen von Hand beweglichen Scanner ablesbar und/oder beschreibbar ist,
- Fig. 3: ein Pfandgerät mit einer seitlichen Öffnung, aus dem die Pfandkarte zu einem Teil hervorsteht, wobei dieser vorstehende Bereich in eine stationäre Einrichtung eindringt, um von dieser gelesen und/oder beschrieben zu werden,
- Fig. 4: ein Pfandgerät, bei dem die Pfandkarte innerhalb des Pfandschlosses verbleibt und durch Strahlen gelesen und/oder beschrieben wird, die durch ein Prisma/Spiegel abgelenkt werden,
- Fig. 5: ein Pfandschloß mit einem oberen Fenster, durch das ein Kontaktgerät steckbar ist, das bis auf die Oberseite der Karte bringbar, insbesondere kontaktierbar ist,
- Fig. 6: ein Pfandschloß mit einer Karte, an der Kontakte und/oder Schreib-/Leseflächen anliegen, wobei das Pfandschloß über äußere Kontakte mit einer stationären oder beweglichen Einrichtung verbunden ist, und
- Fig. 7: ein Pfandschloß ähnlich Figur 6 mit einer Übertragung der Informationen nicht über Kontakte, sondern drahtlos.

An einem nicht dargestellten Einkaufs- oder Gepäckwagen ist ein Pfandschloß 1 befestigt. Entweder weist jeder Wagen ein feststehendes, nicht dargestelltes Kopplungsglied auf, das bei einem Aneinanderfahren der Wagen in das Schloß 1 des benachbarten Wagens eindringt oder aber jeder Wagen trägt ein, an einer Kette oder einem Band befestigtes, nicht dargestelltes Kopplungsglied, das in das Pfandschloß 1 des benachbarten Wagens von Hand eingedrückt werden kann. In beiden Fällen wird durch das Eindringen des Kopplungsgliedes ein im Schloß befindliches Pfand in Form einer Loch-, Schlüssel-, Kredit-, Magnet-, Firmen-, Ausweis-, Identifikations- und/oder Telefonkarte freigegeben. Dieses Pfand 2 wird im folgenden Informationsträger genannt, da es nicht nur die Funktion eines Pfands hat, sondern auf ihm auch Informationen speicherbar und lesbar, insbesondere abrufbar sind.

Wenn ein Käufer oder ein sein Gepäck befördernder Kunde einen Wagen verwenden will, so muß er einen solchen Informationsträger in den Schlitz des Schlosses 1 eines Wagens einschieben, der am Ende einer Wagenreihe sich befindet. Hierdurch wird das Kopplungsglied des benachbarten Wagens gelöst, und der Wagen kann der Reihe entnommen werden. Der Informationsträger 2 verbleibt während des Gebrauchs des Wagens innerhalb des Schlosses 1, und nach dem Gebrauch des Wagens wird der Wagen wieder an einen anderen Wagen oder an einer Station angekoppelt, so daß nach Eindringen des Kopplungsgliedes der Informationsträger 2 wieder frei wird.

Der Informationsträger 2 wird von dem Schloß geprüft und/oder je nach Art der Karte, d.h., ob es sich um eine Loch-, Magnetinformation oder einen Widerstand oder einen integrierten IC-Baustein handelt, wird die Information geprüft und nur bei Übereinstimmung das Kopplungsglied freigegeben. Es können hier die bereits auf dem Markt befindlichen Schlösser bzw. Prüfgeräte verwendet werden, wie sie bereits bei Hotelzimmertüren benutzt werden.

Werden Informationsträger 2 mit Magnetbeschichtung, mit einem IC-Baustein und/oder einer anderen Art einer Aufnahme einer Information, z.B. einem Abknipsen, d.h. einem Anbringen einer Kerbe verwendet, so kann durch diese Information festgestellt werden, wie häufig das jeweilige Geschäft besucht wurde und damit diese Information zu Zwecken der Werbung, Statistik und/oder der Gewährung von Geschenken, Rabatten oder anderen Vorteilen benutzt werden. Auch kann der Informationsträger Werbeaufdrucke besitzen.

In einer weiteren Ausgestaltung ist neben dem Informationsträger 2 eine Münze in das selbe Schloß einschiebbar. Damit weist das Schloß neben der Aufnahme insbesondere dem Schlitz für einen Informationsträger eine weitere Aufnahme, insbesondere einen zweiten, nicht dargestellten Schlitz für eine Münze auf. Alternativ sind Informationsträger 2 und Münze wahlweise in dieselbe Aufnahme bzw. in denselben Schlitz einbringbar.

Der Informationsträger 2 ist in den Zeichnungen als eine flache, längliche Karte dargestellt. Stattdessen kann der Informationsträger aber auch ein anderes Steckteil, ein Stift, eine Kugel, ein Schlüssel, eine Platte oder auch eine kreisförmige Scheibe als Plastikchip sowie auch ein quaderförmiger Block sein. Hierbei ist die Information durch einen Chip, eine Magnetschicht und/oder durch einen Strichcode auf dem Informationsträger 2 gespeichert.

Das Pfandschloß 1 kann eine Stromquelle in Form einer Batterie oder eines Akkumulators besitzen. Ferner kann der Strom auch durch eine Solarzelle erzeugt werden. Besonders vorteilhaft ist es, wenn die Stromquelle des Pfandschlosses 1 ein Empfangsteil, insbesondere eine Antenne aufweist, die in einem Energiefeld elektromagnetische Wellen empfängt, die eine Schaltung, insbesondere eines Chips aktivieren, so daß hierüber die Informationen des Informationsträgers lesbar und/oder speicherbar werden. Das Energiefeld ist nahe einer Kasse oder nahe einer Wagensammelstation eines Geschäfts angeordnet.

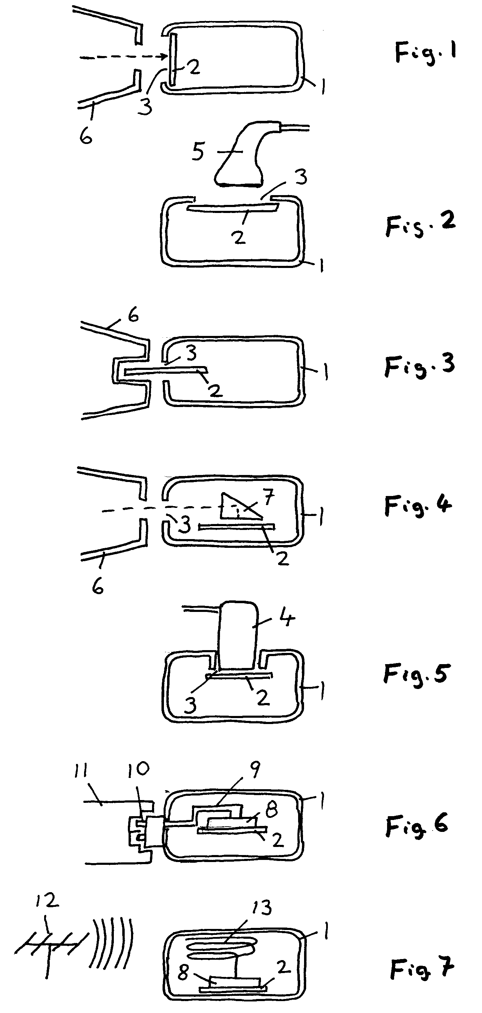

Der Informationsträger 2 kann aus dem Pfandschloß 1 herausgenommen werden, um in ein Schreib-/Lesegerät einer Kasse oder nahe einer Kasse oder nahe einer Wagensammelstation eingeschoben zu werden. Alternativ ist aber besonders vorteilhaft, wenn der Informationsträger 2 im Pfandschloß 1 stets verbleiben kann, bis der Wagen wieder angeschlossen wird. Hierzu weist das Pfandschloß 1 in den Ausführungsbeispielen nach den Figuren 1 bis 5 einen frei zugänglichen Bereich 3 auf, insbesondere in Form eines Fensters.

Über diesen frei zugänglichen Bereich 3 ist der Informationsträger direkt oder indirekt erreichbar. Ein direktes Erreichen des Informationsträgers 2 erfolgt nach dem Ausführungsbeispiel in Figur 5 durch ein Kontaktteil 4, das durch den Bereich 3 bis auf den Informationsträger 2 durchsteckbar ist, um diesen lesen und/oder beschreiben zu können. Hierdurch ist es wie auch in anderen Ausführungsbeispielen nicht erforderlich, eine komplizierte Elektrotechnik innerhalb des Pfandschlosses 1 anzuordnen, sondern das Pfandschloß kann sogar nach den Ausführungsbeispielen 1 bis 5 völlig ohne elektrische Teile bleiben.

Der fensterförmige Bereich 3 ist in den Ausführungsbeispielen nach Figur 1 bis 5 völlig offen dargestellt. Dieser Bereich kann aber durch ein strahlendurchlässiges Material wie Glas oder transparenten Kunststoff geschlossen sein, so daß der Informationsträger geschützt wird. Konstruktiv besonders einfach ist es hierbei, wenn der Informationsträger, der in einer Tasche des Pfandschlosses einliegt, von der zumindest die nach außen gerichtete Seite strahlendurchlässig ist und insbesondere das Fenster aufweist.

Im Ausführungsbeispiel nach Figur 2 wird der Informationsträger über den offenen fensterartigen Bereich 3 von einem von Hand tragbaren Gerät, insbesondere von einem Scanner abgetastet. Hierbei kann dieses Gerät zusätzlich oder alternativ so ausgestattet sein, daß es nicht nur liest, sondern auch schreibt, d.h. auch Informationen auf den Träger 2 aufbringen kann.

Das die Informationen lesende oder schreibende Gerät kann auch von einer stationären Einrichtung gebildet werden, wie sie in den Figuren 1,3 und 4 dargestellt ist. Die Einrichtung 6 sendet optische Strahlen oder Strahlen anderer Wellenart aus und ist insbesondere ein Scanner, vorzugsweise mit einem Laser. Auch dieses Gerät kann wahlweise schreiben und/oder lesen.

Beim Ausführungsbeispiel nach Figur 4 erreichen die Strahlen der stationären Einrichtung 6 oder einer beweglichen Einrichtung nicht direkt den Träger 2, sondern sie werden durch einen Spiegel oder ein Prisma 7 insbesondere rechtwinklig abgelenkt, so daß die Karte waagerecht im Pfandschloß 1 liegt.

Beim Ausführungsbeispiel nach Figur 3 liegt der Träger 2, insbesondere in Kartenform nicht vollständig im Pfandschloß 1, sondern steht durch einen fensterförmigen Bereich 3 nach außen hin vor, um dort mit diesem vorstehenden Bereich in einer stationären oder beweglichen Einrichtung 6 einzuliegen, die wiederum liest und/oder schreibt.

In den Ausführungsbeispielen nach Figur 6 und 7 weist das Pfandschloß elektrische Bauteile auf. Über dem Träger 2, insbesondere in Kartenform, liegt eine Kontakteinrichtung und/oder Übertragungseinrichtung 8, die mit Gegenkontakten am Träger 2 anliegt und/oder optisch, akustisch, magnetisch und/oder induktiv Informationen liest und/oder schreibt. Diese Einrichtung ist über Kabel 9 mit Kontakten 10 an der Außenseite des Pfandschloßgehäuses verbunden. Diese Kontakte 10 kommen mit Gegenkontakten eines Kontaktteils 11 in Berührung, sobald der Wagen zu einer stationären Einrichtung fährt, die diese Kontakte 11 besitzt oder aber die Kontaktteile 11 werden von Hand an das Äußere des Pfandschlosses 1 herangedrückt. Das Kontaktteil 11 ist damit, genauso wie die Einrichtung 6, an einer dafür vorgesehenen Stelle des Geschäfts angeordnet, insbesondere an einer Kasse oder an einer Wagensammelstelle oder an einem Ein-/Ausgang des Geschäfts.

Im Ausführungsbeispiel nach Figur 7 dient zur Datenübertragung ein Sender 12, der zumindest an einer Stelle des Geschäfts angeordnet ist und eine Antenne 13 innerhalb des Pfandschlosses 1, wobei im Ausführungsbeispiel die Antenne 13 von einer Spule gebildet ist. Im Ausführungsbeispiel nach Figur 7 werden elektromagnetische Wellen zum Pfandschloß übertragen, die umgesetzt auf dem Träger 2 gespeichert werden. Die Übertragung kann aber zusätzlich oder alternativ auch in umgekehrter Richtung, d. h., die Antenne 13 kann Informationen abstrahlen zum außen befindlichen Sender 12. Ferner können die gesendeten Strahlen bzw. Wellen optisch, akustisch, magnetisch und/oder induktiv sein.

Bei allen bisher genannten Ausführungsbeispielen erfolgt das Lesen und/oder Schreiben von Informationen von bzw. auf den Informationsträger 2 automatisch, d.h. sobald der Wagen einen Bereich des Geschäftes erreicht hat, der hierzu vorgesehen ist.

Durch die obengenannten Ausführungen sind Informationen über den Kunden, das Einkaufsverhalten und/oder über die Waren, insbesondere die Preise auf der Karte und/oder im Computer des Geschäfts speicherbar. Damit lassen sich auch Informationen über Rabatte und/oder Gewinnspiele speichern und abfragen.

## Patentansprüche

1. Pfandschloß, insbesondere für einen Einkaufswagen mit einem im oder am Pfandschloß (1) zeitweilig anbringbaren Informationsträger (2), insbesondere einer Karte, durch den/die das Schloß entsperrbar ist und der in Verbindung bringbar ist mit einem Computer des Geschäfts, **dadurch gekennzeichnet,** daß vom Informationsträger (2) Informationen lesbar sind, die zum Computer des Geschäfts übertragbar sind und/oder auf dem Informationsträger (2) Informationen speicherbar sind, die vom Computer des Geschäfts übertragbar sind.

2. Pfandschloß nach Anspruch 1, **dadurch gekennzeichnet,** daß der Informationsträger (2) ein Steckteil, eine Karte, ein Stift, eine Kugel, ein Schlüssel, eine Platte, eine insbesondere kreisförmige Scheibe oder ein insbesondere quaderförmiger Block ist.

3. Pfandschloß nach Anspruch 1 oder 2**, dadurch gekennzeichnet,** daß die Information durch einen Chip (integrierte Schaltung), durch eine Magnetschicht und/oder durch einen Strichcode auf dem Informationsträger (2) speicherbar ist.

4. Pfandschloß nach einem der vorigen Ansprüche, **dadurch gekennzeichnet ,** daß die Stromquelle des Pfandschlosses (1) ein Empfangsteil, insbesondere eine Antenne (13) aufweist, das/die in einem Energiefeld (12) Wellen, insbesondere elektromagneitsche Wellen empfängt.

5. Pfandschloß nach Anspruch 4, **dadurch gekennzeichnet,** daß das Energiefeld (12) an mindestens einer bestimmten Stelle des Geschäfts, insbesondere nahe einer Kasse und/oder nahe einer Wagensammelstation abgestrahlt wird.

6. Pfandschloß nach einem der vorigen Ansprüche, **dadurch gekennzeichnet,** daß zumindest ein Bereich des im oder am Pfandschloß anoder eingebrachten Informationsträger (2) von der Schloßaußenseite her frei zugänglich ist für den Anschluß eines Kontaktteils (4,6) oder für Strahlen einer Strahlenquelle, wobei durch das Kontaktteil oder durch die Strahlenquelle Informationen von einem Computer zum Informationsträger (2) übertragbar ist.

7. Pfandschloß nach Anspruch 6, **dadurch gekennzeichnet,** daß der Informationsträger (2) in oder hinter einem Fenster (3) des Pfandschlosses liegt.

8. Pfandschloß nach Anspruch 7, **dadurch gekennzeichnet,** daß das Fenster (3) durch ein strahlendurchlässiges Material geschlossen ist.

9. Pfandschloß nach einem der Ansprüche 6 bis 8, **dadurch gekennzeichnet,** daß der Informationsträger (2) in einer Tasche des Pfandschlosses einliegt, von der zumindest die nach außen gerichtete Seite strahlendurchlässig ist und insbesondere das Fenster aufweist.

10. Pfandschloß nach einem der Ansprüche 6 bis 9, **dadurch gekennzeichnet,** daß der Bereich (3), insbesondere das Fenster an einer senkrechten Seite oder an der waagerechten Oberseite des Pfandschlosses (1) angeordnet ist.

11. Pfandschloß nach einem der Ansprüche 6 bis 10, **dadurch gekennzeichnet,** daß der Kontaktteil (4) oder die Strahlenquelle von Hand tragbar und an oder in das Pfandschloß setzbar sind.

12. Pfandschloß nach einem der Ansprüche 6 bis 11, **dadurch gekennzeichnet,** daß der Kontaktteil oder die Strahlenquelle an einer stationären Einrichtung (6), insbesondere nache einer Kasse, eines Ein-/Ausgangs oder einer Wagensammelstation fest sind und der Wagen mit dem Pfandschloß (1) zu dieser stationären Einrichtung fahrbar ist.

13. Pfandschloß nach einem der Ansprüche 6 bis 12, **dadurch gekennzeichnet,** daß die von außen in das Pfandschloß (1) dringenden Strahlen durch mindestens einen Spiegel oder mindestens ein Prisma (7) zum Informationsträger (2) umgelenkt werden.

14. Pfandschloß nach einem der vorigen Ansprüche, **dadurch gekennzeichnet,** daß der Informationsträger (2) Kontakte aufweist, die bei im oder am Pfandschloß (1) an- oder eingebrachtem Informationsträger (2) an Kontakten des Pfandschlosses oder an mindestens einem Abtastbereich (8) des Pfandschlosses anliegen und daß das Pfandschloß (1) eine Datenübertragungsverbindungsstelle (10-13) aufweist, durch die eine zeitweilige Verbindung zum Computer des Geschäfts erfolgt.

15. Pfandschloß nach einem der Ansprüche 6 bis 14, **dadurch gekennzeichnet,** daß der Informationsträger (2) durch eine Öffnung/Fenster des Pfandschlosses nach außen mit einem Bereich vorsteht, der die Informationen und/oder Kontakte trägt.

16. Pfandschloß nach einem der Ansprüche 6 bis 15, **dadurch gekennzeichnet,** daß das Gehäuse des Pfandschlosses (1) außen oder nahe der Außenseite Kontakte (10) trägt, die durch Kontakte eines stationären oder tragbaren Kontaktteils (11) berührbar sind.

17. Pfandschloß nach Anspruch 16, **dadurch gekennzeichnet,** daß die Datenübertragungsverbindungsstelle einen Sender und/oder Empfänger (12,13), eine Kontaktstelle (8), insbesondere mit Kontakten und Gegenkontakten oder eine Strahlen-, optische, akustische, magnetische und/oder induktive Übertragungseinrichtung aufweist.

18. Pfandschloß nach einem der vorigen Ansprüche, **dadurch gekennzeichnet,** daß das Pfandschloß (1) oder der Informationsträger (2) vom Einkaufswagen abnehmbar sind und an einer Stelle des Geschäfts, insbesondere an einer Kasse oder an einer Wagensammelstelle in Kontakt mit einm stationären oder tragbaren Datenanschlußgerät bringbar sind.

19. Pfandschloß nach Anspruch 18, **dadurch gekennzeichnet,** daß das stationäre Datenanschlußgerät oder die Einrichtung (6) ein vom Kunden bedienbarer Automat ist, der mit dem Computer und/oder der Kasse des Geschäfts verbunden ist.

20. Pfandschloß nach einem der vorigen Ansprüche, **dadurch gekennzeichnet,** daß der Informationsträger (2) Informationen aufgegeben erhält, die zu Zwecken der Werbung, Statistik und/oder der Gewährung von Käufervorteilen, insbesondere Rabatten und Verlosungsgewinnen dienen.
